# EUROPÄISCHE PATENTANMELDUNG

(11) **EP 4 209 154 A1**
(43) Veröffentlichungstag der Anmeldung: **12.07.2023**
(21) Anmeldenummer: 22209539.0
(22) Anmeldetag: 25.11.2022
(51) Int. Cl.: A47J 31/60, A47J 31/06, A47J 31/52

(54) **FILTEREINHEIT, WASSERFÜHRENDER AUTOMAT MIT EINER DERARTIGEN FILTEREINHEIT, VERFAHREN ZUR ERKENNUNG DES GEBRAUCHSZUSTANDES EINER FILTEREINHEIT UND VERFAHREN ZUR BESTIMMUNG DER LEBENSDAUER EINER FILTEREINHEIT**

(30) Priorität: 10.01.2022 BE 202205006
(71) Anmelder: Miele & Cie. KG, 33332 Gütersloh (DE)
(72) Erfinder: Tembaak, Jutta, 49492 Westerkappeln (DE); Last, Mario, 33739 Bielefeld (DE)

(57) **Zusammenfassung**

Filtereinheit, Wasserführender Automat mit einer derartigen Filtereinheit, Verfahren zur Erkennung des Gebrauchszustandes einer Filtereinheit und Verfahren zur Bestimmung der Lebensdauer einer Filtereinheit

Die Erfindung betrifft eine Filtereinheit (1) zur Verwendung in einem wasserführenden Automaten (2), wobei die von dem zu filternden Wasser durchströmte Filtereinheit (1) einen Wasserzulauf (3) und einen Wasserablauf (4) aufweist und erfindungsgemäß der Wasserzulauf (3) oder der Wasserablauf (4) einer neuen, noch unbenutzten Filtereinheit (1) mit einer Membran (5) verschlossen ist.

Weiterhin werden ein wasserführender Automat (2) mit einer derartigen Filtereinheit (1) sowie ein Verfahren zur Erkennung des Gebrauchszustandes einer solchen Filtereinheit (1) und zwei unterschiedliche Verfahren zur Bestimmung der Lebensdauer der Filtereinheit (1) beschrieben.

## Beschreibung

Die Erfindung betrifft eine Filtereinheit, einen wasserführenden Automaten mit einer derartigen Filtereinheit, ein Verfahren zur Erkennung des Gebrauchszustandes der Filtereinheit eines wasserführenden Automaten und zwei Verfahren zur Bestimmung der Lebensdauer einer derartigen Filtereinheit.

Für die Aufbereitung des in einem wasserführenden Automaten zum Einsatz kommenden Wassers werden Filtereinheiten verwendet, da die Qualität des zur Verfügung stehenden Frischwassers für dessen Weiterverarbeitung in dem wasserführenden Automaten von ausschlaggebender Bedeutung ist. Die Qualität des Wassers richtet sich dabei nicht nur nach dessen Reinheitsgrad, sondern auch nach dessen Mineralstoffgehalt, wobei hier insbesondere der Anteil an Kalk und/oder Eisen maßgeblich ist. Dabei kann es vorkommen, dass die lokale Qualität des zur Verfügung stehenden Wassers derartig schlecht ist, dass eine aufwändige Aufbereitung erforderlich wird. Es sind sogar bereits wasserführende Automaten bekannt, die statt des üblichen Frischwassers destilliertes Wasser verwenden, welches vor der Verarbeitung zunächst mineralisiert werden muss. Eine derartige Vorgehensweise hat den maßgeblichen Vorteil, dass das zum Einsatz kommende Wasser stets die gleiche Zusammensetzung aufweist.

Ein weiteres Problem beim Einsatz von qualitativ geringwertigem Wassers besteht in den darin enthaltenen Schwebeteilchen beziehungsweise Eintrübungen, die aus dem Wasser herausgefiltert werden müssen, bevor dieses in dem Strömungsleitungssystem des wasserführenden Automaten verarbeitet werden kann.

Filtereinheiten zum Filtern von Wasser werden bei bislang bekannten wasserführenden Automaten zumeist in den vorhandenen, mit Wasser befüllten Vorratsbehälter, also bevorzugt in den Wassertank integriert oder schließen sich unmittelbar an den Wasserauslass des Vorratsbehälters an, weshalb sie, in Flussrichtung des Wassers betrachtet, dem Vorratsbehälter auch vor- oder nachgeordnet sein können. Derartige Filtereinheiten sind selbstverständlich bei wasserführenden Automaten einsetzbar, die anstelle eines mit Wasser befüllten Vorratsbehälters einen fest installierten Wasseranschluss an das Frischwasser-Leitungssystem aufweisen. Wenn nachfolgend von einem vorhandenen Vorratsbehälter zur Aufnahme von Wasser ausgegangen wird, so sind diese Ausführungen als synonym für die Ausführbarkeit der Erfindung anzusehen.

Aus der DE 10 2008 010 914 A1 ist bereits ganz allgemein ein wasserführender Automat am Beispiel eines Kaffeevollautomaten bekannt, der als Wasservorrat einen Wasserbehälter zur Aufnahme von Frischwasser aufweist, das der Zubereitung von Getränken sowie der Durchführung von Reinigungsprogrammen des Kaffeevollautomaten dient. In den Wasserbehälter ist eine Filtereinheit mit einem Wasserfilter eingesetzt, um das im Wassertank befindliche Wasser aufzubereiten, bevor es dem Strömungsleitungssystem des wasserführenden Automaten zugeführt wird. Der Wasserfilter besteht dabei aus einer Filterkartusche mit einem Filtergranulat, welches in an sich bekannter Weise dazu verwendet wird, das Wasser des Vorratsbehälters zu demineralisieren beziehungsweise feine Partikel aus dem Wasser herauszufiltern. Um das Wasser durch den Wasserfilter hindurch zu saugen, verfügt der in der Druckschrift beschriebene Kaffeevollautomat über eine Pumpe, die einen Saugdruck erzeugt. In dem Wassertank ist zur Aufnahme des Wasserfilters ferner ein Tankstutzen vorhanden, auf den der austauschbare Wasserfilter unter Bildung einer Abdichtung aufgesetzt wird.

Darüber hinaus geht aus der WO 2008/017492 A1 ein Wassertank eines wasserführenden Automaten hervor, bei dem es sich ebenfalls um einen Kaffeevollautomaten handelt. Der wasserführende Automat weist eine Filtereinheit mit einem Wasserfilter auf. Die in dieser Druckschrift beschriebene Lösung dient dazu, nur zugelassene Wasserfilter in den Wassertank einsetzen zu können, wozu sowohl die Filtereinheit, als auch der zur Aufnahme der Filtereinheit ausgeführte Anschlussflansch im Wassertank jeweils korrespondierende Geometrien nach dem Prinzip Schlüssel-Schlüsselloch aufweisen.

Eine ähnliche Lösung geht auch aus der EP 2 049 220 B1 hervor. Bei dieser Lösung weist der Anschluss der Filtereinheit in dem Vorratsbehälter zur Aufnahme von Wasser eine mechanische Kodierungsstruktur auf, um den Einsatz einer nicht passenden Filtereinheit auszuschließen. Hierfür weist ein am Vorratsbehälter vorhandener Anschlusssockel eine polygonförmige Außenkontur auf, wobei die Filtereinheit über eine hierzu passende Anschlussgeometrie verfügt, sodass dadurch die mechanische Kodierungsstruktur gebildet wird.

Eine sehr aufwändige Lösung zur Erkennung einer in einen mit Wasser gefüllten Vorratsbehälter eingesetzten Filtereinheit beschreibt darüber hinaus die EP 3 078 638 A1, bei der mittels elektronischer Kommunikationselemente mit Antennen Daten ausgetauscht werden.

Hierfür dient eine Anordnung eines Magnetfeldleitelements zur Verdichtung magnetischer Feldlinien im Bereich zwischen kommunizierenden Antennen.

Sofern die Filtereinheit in den Vorratsbehälter für Wasser eingesetzt ist, muss ferner beachtet werden, dass vor der Durchführung eines Entkalkungs- oder Reinigungsprogrammes, bei dem ein Entkalkungs- oder Reinigungsmittel in das Wasser des Vorratsbehälters gegeben wird, die Filtereinheit aus dem Vorratsbehälter entfernt wird. Im Anschluss an den Reinigungsbeziehungsweise Entkalkungsvorgang muss die Filtereinheit dann wieder in den Wassertank eingesetzt werden. Diese Maßnahme erfordert einen gewissen Aufwand vom Anwender des wasserführenden Automaten.

Der Erfindung stellt sich somit das Problem, eine Filtereinheit bereitzustellen, deren Einsatz in einem wasserführenden Automaten ohne den Einsatz aufwendiger Elektronik erkennbar ist sowie einen wasserführenden Automaten mit einer derartigen Filtereinheit anzugeben, dessen Aufbau und Handhabung gegenüber bekannten Lösungen vereinfacht ist. Darüber hinaus ist ein Verfahren zur Erkennung des Gebrauchszustandes der Filtereinheit eines wasserführenden Automaten und sind zwei Verfahren zur Bestimmung der Lebensdauer einer derartigen Filtereinheit bereitzustellen, die mit einfachen Mitteln eine Aussage über den Zustand der Filtereinheit ermöglichen.

Erfindungsgemäß wird dieses Problem durch eine Filtereinheit mit den Merkmalen des Patentanspruches 1, durch einen wasserführenden Automaten mit einer derartigen Filtereinheit mit den Merkmalen des Patentanspruches 4, durch ein Verfahren zur Erkennung des Gebrauchszustandes der Filtereinheit eines wasserführenden Automaten mit den Merkmalen des Patentanspruches 8 und durch die Verfahren zur Bestimmung der Lebensdauer einer derartigen Filtereinheit mit den Merkmalen der Patentansprüche 10 und 11 gelöst. Vorteilhafte Ausgestaltungen und Weiterbildungen der Erfindung ergeben sich aus den nachfolgenden Unteransprüchen.

Eine Filtereinheit zur Verwendung in einem wasserführenden Automaten, wobei die von dem zu filternden Wasser durchströmte Filtereinheit einen Wasserzulauf und einen Wasserablauf aufweist, wurde erfindungsgemäß dahingehend weitergebildet, dass der Wasserzulauf oder der Wasserablauf einer neuen, noch unbenutzten Filtereinheit mit einer Membran verschlossen ist.

Eine erfindungsgemäße Filtereinheit der hier zum Einsatz kommenden Bauart weist allgemein ein Gehäuse auf, an dem ein Wasserzulauf und ein Wasserablauf vorhanden sind, sodass über den Wasserzulauf zugeführtes Wasser ein in dem Gehäuse vorhandenes Filtermedium durchsetzt und dabei beispielsweise entkalkt, entkeimt oder gereinigt wird, bevor es durch den Wasserablauf der Filtereinheit in ein sich anschließendes Strömungsleitungssystem eines wasserführenden Automaten abgegeben werden kann. Die Membran stellt erfindungsgemäß ein Qualitätsmerkmal der Filtereinheit dar und ermöglicht auf sehr einfache Weise zu erkennen, ob die Filtereinheit bereits einmal in einem wasserführenden Automaten verwendet wurde oder nicht. Das Grundprinzip der Erfindung ähnelt damit den bereits bekannten Sicherheitsetiketten. Jedoch geht die Lösung einen ganz wesentlichen Schritt weiter, da die Membran auch eine funktionale Eigenschaft aufweist, die darin besteht, dass die Zerstörung der Membran die eigentliche Funktionsweise der Filtereinheit überhaupt erst ermöglicht. Solange die Membran unzerstört ist, kann die Filtereinheit demnach nicht zur Filterung von Wasser verwendet werden. Es soll an dieser Stelle nicht unerwähnt bleiben, dass von der Erfindung auch Filtereinheiten umrissen sind, die lediglich aus einem Filterelement bestehen, dass auf den Wasserauslass des Vorratsbehälters aufgesetzt ist. Ein Wassereinlass betiehungsweise ein Gehäuse ist zumeist bei derartig einfachen Filterelementen nicht vorhanden. In einem solchen Fall wird die Membran selbstverständlich am Wasserauslass des Filterelements vorgesehen, also am Übergang zwischen der Filtereinheit und dem Auslass des Vorratsbehälters.

Eine erste Ausgestaltung der Erfindung ist darin zu sehen, dass die Membran durch das Einsetzen der Filtereinheit in den wasserführenden Automaten oder durch den Unterdruck einer Pumpe des wasserführenden Automaten zerstörbar ist.

Die Membran der Filtereinheit wird nach diesem Vorschlag entweder auf mechanische Weise zerstört, was beispielsweise durch einen dornartigen Vorsprung in der Aufnahmegeometrie des die Filtereinheit aufnehmenden, wasserführenden Automaten umsetzbar ist. Andere Lösungen können beispielsweise darin bestehen, dass die Membran vollständig ausgestanzt wird, wenn die Filtereinheit in den wasserführenden Automaten eingesetzt wurde. Darüber hinaus beschreibt diese Ausgestaltung der Erfindung eine Lösung, nach der die Filtereinheit zunächst in den wasserführenden Automaten eingesetzt wird und die Pumpe des Strömungsleitungssystems des wasserführenden Automaten durch ihre Aktivierung einen Unterdruck erzeugt, der ausreicht, die Membran zu zerstören. Diese neuartige Vorgehensweise erfordert entweder eine Sollbruchstelle in der Membran oder eine exakt ausgelegte Materialstärke, das heißt Festigkeit der Membran.

Demgemäß geht eine weiterführende Lösung nach der Erfindung dahin, dass die Membran aus Metall, Papier, Kunststoff oder einem Verbundmaterial besteht. Selbstverständlich sind auch Kombinationen der einzelnen, genannten Werkstoffe möglich. So kann beispielsweise die Membran auch aus einem mit Papier beschichteten Metall bestehen.

Ein wasserführender Automat, in dem die zuvor beschriebene Filtereinheit zum Einsatz kommt umfasst im wesentlichen einen mit Wasser befüllbaren, mit der Filtereinheit koppelbaren Vorratsbehälter, über dessen Auslass das Wasser in das Strömungsleitungssystem des Automaten abführbar ist und wenigstens eine Pumpe zur Erzeugung eines der Förderung des Wassers innerhalb des Strömungsleitungssystems des Automaten dienenden Druckes, wobei der Wasserzulauf oder der Wasserablauf der neuen, noch unbenutzten Filtereinheit mit einer Membran verschlossen ist, die durch das Einsetzen der Filtereinheit in den wasserführenden Automaten oder durch den Unterdruck der Pumpe des wasserführenden Automaten zerstörbar ist.

Letztlich ist somit auch ein wasserführender Automat Gegenstand der Erfindung, in den die zuvor beschriebene Filtereinheit eingesetzt werden kann und darin Verwendung findet. Der wasserführende Automat muss demzufolge entweder eine Aufnahmegeometrie aufweisen, die beim Einsetzen der Filtereinheit eine Zerstörung der Membran bewirkt oder über eine Pumpe innerhalb seines Strömungsleitungssystem verfügen, die einen ausreichend hohen Unterdruck erzeugt, um die Membran der neuen, noch ungebrauchten Filtereinheit durch diesen Unterdruck zu zerstören. Insgesamt ist ein derartiger wasserführender Automat wesentlich einfacher ausgeführt, als bislang bekannte Lösungen, wie sie im Zusammenhang mit der Erörterung des Standes der Technik eingangs beschrieben wurden. So muss keine aufwändige Elektronik zum Einsatz kommen, um das Vorhandensein der Filtereinheit in dem wasserführenden Automaten zu sensieren. Insgesamt kann der wasserführende Automat damit kompakter und kostengünstiger ausgeführt werden, als dies bislang möglich war.

Wie zuvor bereits beschrieben wurde, entspricht es einer Ausgestaltungsvariante des wasserführenden Automaten, dass dieser eine zu der Filtereinheit komplementär ausgeführte, die Filtereinheit lösbar fixierende Aufnahmemechanik oder Aufnahmegeometrie mit einem die Membran beim Einsetzen der Filtereinheit in den Automaten zerstörenden, scharfkantigen Mittel aufweist. Bei dem scharfkantigen Mittel kann es sich beispielsweise um einen Dorn oder eine Schneide handeln. Ebenso ist eine Lösung denkbar, bei der die Membran während des Einsetzens der Filtereinheit in den wasserführenden Automaten abgetrennt wird. Insgesamt werden dabei mechanische Lösungen bevorzugt, wobei auch eine thermische Abtrennung der Membran im Bereich der Erfindung zu sehen ist.

In dem Strömungsleitungssystem eines wasserführenden Automaten ist in der Regel ein Durchflussmessgerät vorhanden. Dieses kann erfindungsgemäß auch dazu verwendet werden, die Anzahl der Einzelwasserentnahmen oder das kumulative Volumen des aus dem Vorratsbehälter entnommenen Wassers zu erfassen. Alternativ oder ergänzend hierzu kann auch eine Lösung verfolgt werden, nach der ein Zeitraum der Verwendung der Filtereinheit des wasserführenden Automaten erfasst wird. All diese Maßnahmen sind mittels einer elektronischen Steuerungseinheit umsetzbar und in sehr vorteilhafter Weise geeignet, zu prognostizieren, wann die Filtereinheit eines Austausches bedarf, sie also verbraucht ist. Es versteht sich von selbst, dass bei Erreichung dieses Zustandes eine visuelle Darstellung erforderlich ist, die beispielsweise in einer geeigneten Anzeigevorrichtung, also zum Beispiel in einem Display, erfolgt.

Wasserführende Automaten der hier betroffenen Art können beispielsweise Kaffeevollautomaten, Kühlautomaten oder Waschautomaten sein, wobei diese Aufzählung nicht als abschließend zu betrachten ist. Denkbar wäre zum Beispiel auch die Verwendung der Filtereinheit in einem Wasserkocher oder in einem Trinkwasserspender.

Ein erfindungsgemäßes Verfahren zur Erkennung des Gebrauchszustandes einer Filtereinheit ist dadurch gekennzeichnet, dass:
- vor dem Einsetzen der Filtereinheit in den Automaten mittels eines Drucksensors oder mittels der Durchflussmessung des Durchflussmessgerätes ein in der elektronischen Steuerungseinheit verarbeitbarer Istwert oder Normwert des Druckes beziehungsweise des Volumenstromes des Strömungsleitungssystems erfasst wird,
- anschließend eine neue, ungebrauchte, eine Membran an ihrem Wasserzulauf oder Wasserablauf aufweisende Filtereinheit in die Aufnahmemechanik oder Aufnahmegeometrie des Automaten eingesetzt wird und
- ein Unterdruck durch die nachfolgende Aktivierung der Pumpe des Strömungsleitungssystems des Automaten erzeugt wird, sodass die Membran durch diesen Unterdruck zerstört wird.

Durch die vorangehende Bestimmung eines Istwertes des Druckes, den die Pumpe innerhalb des Strömungsleitungssystems erzeugt, wird ein Vergleichswert geschaffen und in der elektronischen Steuerungseinheit gespeichert, der dem Normalbetrieb des wasserführenden Automaten entspricht. Wird nun eine neue, noch ungebrauchte Filtereinheit mit der verschlossenen Membran in den wasserführenden Automaten eingesetzt, so stellen sich sprunghaft zwei sehr wesentliche Zustandsänderungen ein. Einerseits muss die Pumpe einen wesentlich höheren Unterdruck erzeugen, da sie gegen die geschlossene Membran arbeitet.

Andererseits registriert ein in dem Strömungsleitungssystem des wasserführenden Automaten vorhandenes Durchflussmessgerät keinen Wasserfluss, solange die Membran verschlossen ist. Übersteigt der von der Pumpe erzeugte Druck einen bestimmten Wert, so wird die Membran zerstört und der Druck fällt sprunghaft auf den Druck des Normalbetriebes ab, während gleichzeitig das Durchflussmessgerät eine sprunghafte Zunahme des Volumenstromes des angesagten Wassers verzeichnet. Beide Zustandsänderungen können verwendet werden, um zu signalisieren, dass eine neue Filtereinheit in den wasserführenden Automaten eingesetzt wurde. Als Steuerungsmittel hierfür dient die elektronischen Steuerungseinheit des wasserführenden Automaten. Dabei ist es möglich, nur eines der genannten Vorgehensweisen zu verwenden, also beispielsweise nur den Druckabfall oder nur den nicht vorhandenen Volumenstrom zu erfassen oder beide Werte redundant abzufragen. Durch diese Maßnahmen kann auf einfache Weise eine zuverlässige Aussage darüber getroffen werden, in welchem Gebrauchszustand sich die Filtereinheit befindet, ob sie also neu und ungebraucht ist oder bereits einmal verwendet wurde. Bei einer bereits verwendeten Filtereinheit wäre die Membran zerstört und die Werte, wie der Druckanstieg und der nicht vorhandene Volumenstrom wären nicht gegeben. In dem zuletzt genannten Fall müsste in einer Anzeigevorrichtung des wasserführenden Automaten signalisiert werden, dass eine neue Filtereinheit einzusetzen ist.

Anders gelagert wäre der Fall, wenn eine gebrauchte, jedoch noch nicht verbrauchte Filtereinheit in den wasserführenden Automaten eingesetzt wird. Diese Situation ist erfassbar, indem die Anzahl der Einzelwasserentnahmen oder das kumulative Volumen des aus dem Vorratsbehälter entnommenen Wassers erfasst werden, wie dies zuvor bereits beschrieben wurde. Hierzu zählt auch die Möglichkeit, nach der ein Zeitraum der Verwendung der Filtereinheit erfasst wird. Sind dabei die maximalen, in der elektronischen Steuerungseinheit gespeicherten Werte mit der eingesetzten Filtereinheit noch nicht erreicht, so kann diese nochmals verwendet werden, auch wenn die Membran bereits zerstört wurde.

Zur Umsetzung der Erfassung, ob es sich um eine neue, noch ungebrauchte Filtereinheit oder eine bereits gebrauchte Filtereinheit handelt, die in den wasserführenden Automaten eingesetzt wird, geht eine Weiterbildung des Verfahrens dahin, dass nach der Zerstörung der Membran mittels eines Drucksensors oder mittels der Durchflussmessung des Durchflussmessgerätes der plötzlich ansteigende Volumenstrom oder der Druckabfall im Strömungsleitungssystem als Steuerungssignal für die erfolgreiche Aktivierung der neu eingesetzten Filtereinheit erfasst wird.

Die erfindungsgemäße Filtereinheit bietet jedoch in einem wasserführenden Automaten noch weitere, sehr wesentliche Vorteile. So kann beispielsweise die Lebensdauer der Filtereinheit sehr genau bestimmt werden, wozu ein erstes, erfindungsgemäßes Verfahren zur Bestimmung der Lebensdauer einer Filtereinheit dadurch gekennzeichnet ist, dass mittels der elektronischen Steuerungseinheit und mittels des Durchflussmessgerätes des wasserführenden Automaten die Anzahl der Wasserentnahmen aus dem einen Wasservorrat enthaltenden Vorratsbehälter oder das kumulierte Wasservolumen erfasst wird und nach Erreichung eines in der elektronischen Steuerungseinheit gespeicherten Istwertes ein Signal zum Austausch der Filtereinheit erzeugt und visuell dargestellt wird.

Alternativ hierzu ist ein weiteres Verfahren zur Bestimmung der Lebensdauer einer Filtereinheit dadurch gekennzeichnet, dass mittels der elektronischen Steuerungseinheit und eines der Filtereinheit nachgeordneten Drucksensors in dem Strömungsleitungssystem des wasserführenden Automaten ein sich durch den Verbrauch der Filtereinheit einstellender Druckanstieg erfasst wird und nach Erreichen eines in der elektronischen Steuerungseinheit gespeicherten Istwertes ein Signal zum Austausch der Filtereinheit erzeugt und visuell dargestellt wird.

Dieses Verfahren ist folglich dadurch gekennzeichnet, dass die Filtereinheit bei Ablauf ihrer Lebensdauer mit Kalk oder Verunreinigungen zugesetzt ist, sodass der Druckanstieg erfassbar wird und als Signal zur Anzeige gebracht werden kann, dass ein Austausch der Filtereinheit erforderlich wird.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: einen wasserführenden Automaten am Beispiel eines Kaffeevollautomaten in einer perspektivischen Ansicht,
- Figur 2:: ein Prinzipschaltbild eines Teils des Strömungsleitungssystems eines als Kaffeevollautomaten ausgeführten, wasserführenden Automaten,
- Figur 3:: einen Stadienplan unterschiedlicher Zustände einer Filtereinheit
und
- Figur 4:: ein Flussdiagramm des Durchflussmessgerätes eines wasserführenden Automaten.

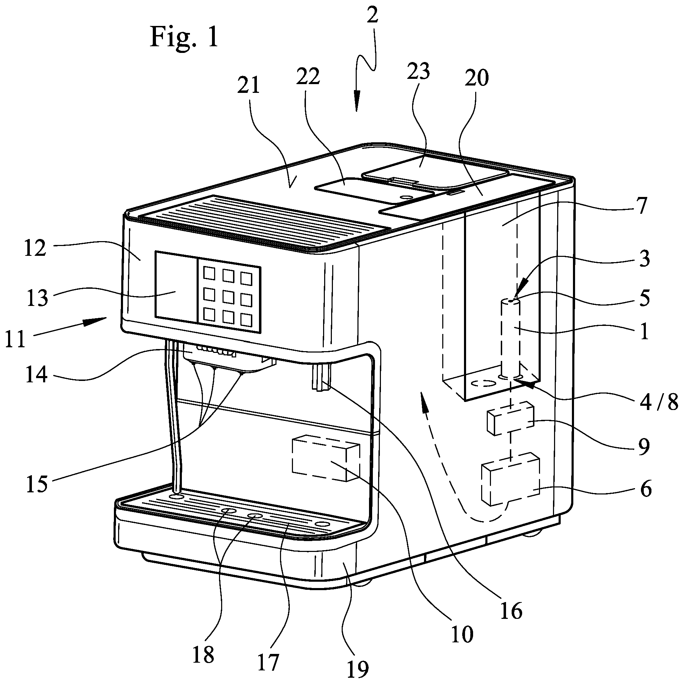

Aus der Figur 1 geht ein wasserführender Automat 2 am Beispiel eines Kaffeevollautomaten in einer Ausführung als freistehendes Einzelgerät hervor, mit dem unterschiedliche Kaffeegetränke hergestellt werden können, der jedoch beispielsweise auch die Möglichkeit bietet, Heißwasser für die Zubereitung eines Teegetränkes zu entnehmen. Der dargestellte Kaffeevollautomat 2 verfügt über einen Vorratsbehälter 7 zur Aufnahme von Wasser, einfacher ausgedrückt also über einen Wassertank. In den Vorratsbehälter 7 ist eine Filtereinheit 1 eingesetzt, durch die das in dem Vorratsbehälter 7 vorhandene Wasser gefiltert werden kann, bevor es in das Strömungsleitungssystem des Kaffeevollautomaten 2 überführt wird.

Die erfindungsgemäße Besonderheit besteht vorliegend darin, dass die Filtereinheit 1 einen oberen Wasserzulauf 3 und einen diesem gegenüberliegend angeordneten, unteren Wasserablauf 4 aufweist, der sich innerhalb der Aufnahmegeometrie des Vorratsbehälters 7 für die Filtereinheit 1 befindet. Der Wasserablauf 4 der Filtereinheit 1 ist somit in der Darstellung der Figur 1 dort zu finden, wo sich auch der Auslass 8 des Vorratsbehälters 7 befindet. Im Bereich des Wasserzulaufes 3 der Filtereinheit 1 ist zudem eine Membran 5 erkennbar, die den Wasserzulauf 3 der Filtereinheit 1 so lange verschließt, bis innerhalb des Strömungsleitungssystems des Kaffeevollautomaten 2 ein Unterdruck erzeugt wird, der ausreicht, die Membran 5 zu zerstören.

In Flussrichtung des Wassers betrachtet, folgt dem Auslass 8 des Vorratsbehälters 7 zunächst ein Durchflussmessgerät 9, dem sich eine Pumpe 6 anschließt. Die Pumpe 6 erzeugt den zuvor bereits erwähnten Unterdruck (Saugdruck), durch den das Wasser innerhalb des Strömungsleitungssystems gefördert wird und durch den die Membran 5 zerstört wird, nachdem eine neue, noch ungebrauchte Filtereinheit 1 in den Vorratsbehälter 7 eingesetzt und die Pumpe 6 aktiviert wurde. Zur Ansteuerung der einzelnen Prozesse innerhalb des Kaffeevollautomaten 2 dient im vorliegenden Fall eine elektronische Steuerungseinheit 10.

Der in Figur 1 dargestellte Kaffeevollautomat 2 verfügt von der erfindungsgemäßen Besonderheit losgelöst über einen an sich bekannten Aufbau. Von seiner Frontseite 11 her betrachtet weist der Kaffeevollautomat 2 unter einem oberen Vorbau 12, in dem sich auch eine Eingabe- und Anzeigeeinrichtung 13 befindet, einen Zentralauslauf 14 auf, dessen Funktion in der Ausgabe der mit dem Kaffeevollautomaten 2 hergestellten Aufgussgetränke oder deren Zusätze in ein unterhalb des Zentralauslaufs 14 abgestelltes, jedoch in der Figur 1 nicht dargestelltes Trinkgefäß besteht. Für die Ausgabe der erzeugten Aufgussgetränke beziehungsweise der Zugabe von Zusätzen in die hergestellten Aufgussgetränke dienen unterhalb des Zentralauslaufs 14 vorhandene Auslaufdüsen 15. Seitlich neben dem Zentralauslauf 14 ist unterhalb des oberen Vorbaus 12 ferner eine Dampfdüse 16 zu erkennen, die hauptsächlich der Abgabe von Wasserdampf zum Aufschäumen von Getränken oder Getränkezusätzen dient. So kann mit dieser Dampfdüse 16 zum Beispiel Milchschaum erzeugt werden. Die in der Figur 1 erkennbare Abstellfläche 17 dient in der zuvor bereits beschriebenen Weise dem Abstellen eines Trinkgefäßes unterhalb des Zentralauslaufs 14. Die Abstellfläche 17 ist vorliegend als ein Abtropfblech ausgeführt und weist mehrere Ablauföffnungen 18 auf, über die Flüssigkeitsreste in eine unterhalb der Abstellfläche 17 vorhandene und in der Figur 1 nicht erkennbare Auffangschale abgeführt werden. Sowohl die Auffangschale, als auch die Abstellfläche 17 befinden sich innerhalb eines unteren Vorbaus 19 des Kaffeevollautomaten 2. Das für die Herstellung der Aufgussgetränke erforderliche Wasser wird in dem Vorratsbehälter 7 aufbewahrt, dessen Verschlussdeckel 20 sich an der Oberseite 21 des Kaffeevollautomaten 2 befindet. Seitlich neben dem Vorratsbehälter 7 sind zudem mehrere Behälterdeckel 22 und 23 erkennbar. Die Behälterdeckel 22, 23 decken dabei Vorratsbehälter ab, in denen sich zum Beispiel unterschiedliche Tee- oder Kaffeesorten befinden können.

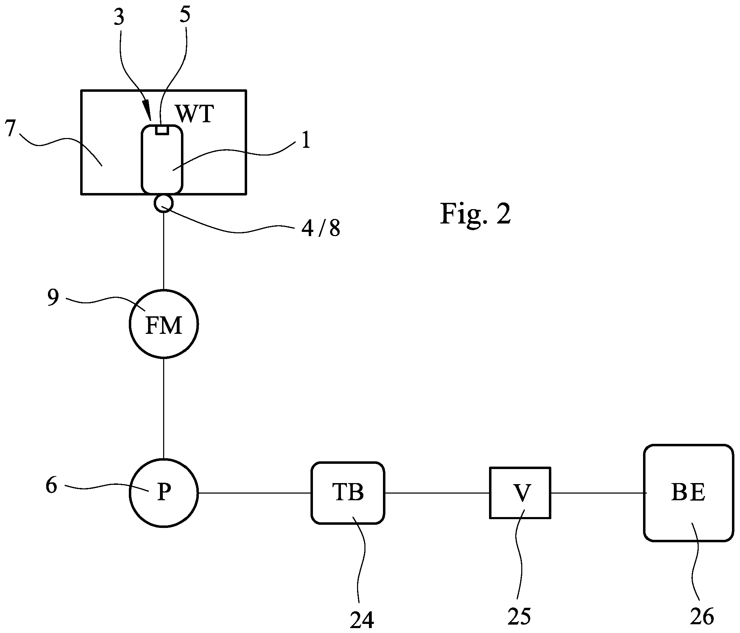

Die Figur 2 veranschaulicht ein Prinzipschaltbild eines Teils des Strömungsleitungssystems eines als Kaffeevollautomaten ausgeführten, wasserführenden Automaten 2. Wie zuvor bereits ausgeführt wurde, verfügt der wasserführende Automat 2 über einen Vorratsbehälter 7, der mit Wasser gefüllt wird, das beispielsweise bei der Ausführung des wasserführenden Automaten 2 als Kaffeevollautomat zur Herstellung der Getränke benötigt wird. In den Vorratsbehälter 7 ist eine Filtereinheit 1 derart eingesetzt, dass ihr Wasserablauf 4 mit dem Auslass 8 des Vorratsbehälters 7 zusammenfällt. Der Wasserablauf 4 der Filtereinheit 1 und der Auslass 8 weisen somit eine komplementäre Geometrie auf, die ineinander eingesetzt oder miteinander gekoppelt werden kann. Im Bereich des Wasserzulaufes 3 der Filtereinheit 1 weist diese eine Membran 5 auf, die bei einer neuen, noch ungebrauchten Filtereinheit 1 verschlossen ist und durch den von der Pumpe 6 des Strömungsleitungssystems erzeugten Unterdruck zerstört wird, wenn dieser ausreichend hoch ist. An den Auslass 8 des Vorratsbehälters 7 schließt sich in Strömungsrichtung betrachtet zunächst ein Durchflussmessgerät 9 an, welches in an sich bekannter Weise das Volumen des aus dem Vorratsbehälter 7 entnommenen Wassers erfasst. Dem Durchflussmessgerät 9 folgt eine Pumpe 6, deren Funktion bereits erläutert wurde. Der in Figur 2 gezeigte Ausschnitt des Strömungsleitungssystems eines wasserführenden Automaten 2 betrifft einen Kaffeevollautomaten, sodass der Pumpe 6 eine Heizeinrichtung 24 und eine Ventileinheit 25 folgen, wobei die Heizeinrichtung 24 das Wasser des Strömungsleitungssystems erhitzt und über die Ventileinheit 25 gesteuert an eine Brüheinheit 26 abgibt, in der das Kaffeegetränk durch Zusammenführung des heißen Wassers mit einem Kaffeepulver erzeugt wird.

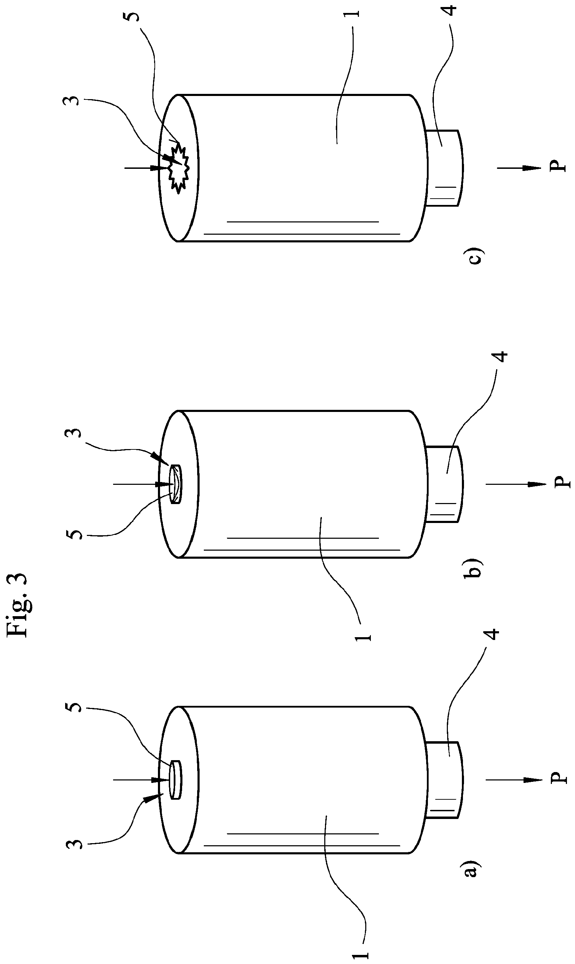

Aus der Figur 3 geht ein Stadienplan unterschiedlicher Zustände einer Filtereinheit 1 hervor, wobei im Bildteil a) die Filtereinheit im Bereich ihres Wasserzulaufes 3 eine geschlossene Membran 5 aufweist. In diesem Zustand kann durch die Filtereinheit 1 kein Wasser in das Strömungsleitungssystem des wasserführenden Automaten 2 überführt werden, sodass der Druck p am Wasserablauf 4 der Filtereinheit 1 ansteigt und durch das Durchflussmessgerät 9 kein Volumenstrom erfassbar ist.

Die Drucksteigerung ist in dem Bildteil b) durch die sich absenkende Membran 5 veranschaulicht worden.

Durch den zunehmenden Druck der Pumpe 6 wird zu einem bestimmten Zeitpunkt der Status erreicht, der im Bildteil c) dargestellt ist. Die Membran 5 ist nunmehr vollständig zerstört, sodass über den Wasserzulauf 3 ungehindert frisches Wasser durch die Filtereinheit 1 hindurch zum Wasserablauf 4 und damit mit dem Normaldruck p des Strömungsleitungssystems in dieses überführt werden kann. Zu diesem Zeitpunkt erfasst auch das Durchflussmessgerät einen Anstieg des Volumenstromes.

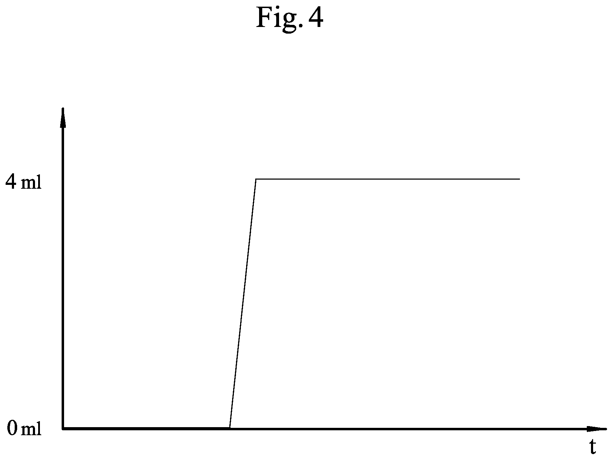

Das beschriebene Prinzip des Anstiegs des Volumenstromes, welcher mittels des Durchflussmessgerätes 9 erfasst werden kann, wird in der Darstellung der Figur 4 gezeigt. In dem Diagramm ist das vom Durchflussmessgerät 9 erfasste Volumen zunächst auf dem Stand 0 und steigt bei Erreichen eines definierten, von der Pumpe 6 erzeugten Druckes sprunghaft auf den Normalwert an, wenn die Membran 5 der Filtereinheit 1 zerstört ist.

### BEZUGSZEICHENLISTE:

1 Filtereinheit
2 wasserführender Automat
3 Wasserzulauf
4 Wasserablauf
5 Membran
6 Pumpe
7 Vorratsbehälter
8 Auslass (des Vorratsbehälters)
9 Durchflussmessgerät
10 elektronische Steuerungseinheit
11 Frontseite
12 oberer Vorbau
13 Eingabe- und Anzeigevorrichtung
14 Zentralauslauf
15 Auslaufdüsen
16 Dampfdüse
17 Abstellfläche
18 Ablauföffnungen
19 unterer Vorbau
20 Verschlussdeckel
21 Oberseite
22 Behälterdeckel
23 Behälterdeckel
24 Heizeinrichtung
25 Ventileinheit
26 Brühleinheit

## Patentansprüche

1. Filtereinheit (1) zur Verwendung in einem wasserführenden Automaten (2), wobei die von dem zu filternden Wasser durchströmte Filtereinheit (1) einen Wasserzulauf (3) und einen Wasserablauf (4) aufweist,
**dadurch gekennzeichnet, dass**
der Wasserzulauf (3) oder der Wasserablauf (4) einer neuen, noch unbenutzten Filtereinheit (1) mit einer Membran (5) verschlossen ist.

2. Filtereinheit nach Anspruch 1,
**dadurch gekennzeichnet, dass**
die Membran (5) durch das Einsetzen der Filtereinheit (1) in den wasserführenden Automaten (2) oder durch den Unterdruck einer Pumpe (6) des wasserführenden Automaten (2) zerstörbar ist.

3. Filtereinheit nach einem der vorstehend genannten Ansprüche,
**dadurch gekennzeichnet, dass**
die Membran (5) aus Metall, Papier, Kunststoff oder einem Verbundmaterial besteht.

4. Wasserführender Automat (2) mit einer Filtereinheit (1) nach einem der vorstehend genannten Ansprüche, umfassend:
- einen mit Wasser befüllbaren, mit der Filtereinheit (1) koppelbaren Vorratsbehälter (7), über dessen Auslass (8) das Wasser in das Strömungsleitungssystem des Automaten (2) abführbar ist und
- wenigstens eine Pumpe (6) zur Erzeugung eines der Förderung des Wassers innerhalb des Strömungsleitungssystems des Automaten (2) dienenden Unterdruckes,
**dadurch gekennzeichnet, dass**
der Wasserzulauf (3) oder der Wasserablauf (4) der neuen, noch unbenutzten Filtereinheit (1) mit einer Membran (5) verschlossen ist, die durch das Einsetzen der Filtereinheit (1) in den wasserführenden Automaten (2) oder durch den Unterdruck der Pumpe (6) des wasserführenden Automaten (2) zerstörbar ist.

5. Wasserführender Automat nach Anspruch 4,
**dadurch gekennzeichnet, dass**
der wasserführende Automat (2) eine zu der Filtereinheit (1) komplementär ausgeführte, die Filtereinheit (1) lösbar fixierende Aufnahmemechanik oder Aufnahmegeometrie mit einem die Membran (5) beim Einsetzen der Filtereinheit (1) in den Automaten (2) zerstörenden, scharfkantigen Mittel aufweist.

6. Wasserführender Automat nach Anspruch 4 oder 5,
**dadurch gekennzeichnet, dass**
in dem Strömungsleitungssystem des wasserführenden Automaten (2) ein Durchflussmessgerät (9) vorhanden ist, wobei die wobei die Anzahl der Einzelwasserentnahmen oder das vom Durchflussmessgerät (9) gemessene, kumulative Volumen oder ein Zeitraum der Verwendung der Filtereinheit (1) mittels einer elektronischen Steuerungseinheit (10) des Automaten (2) erfassbar ist.

7. Wasserführender Automat nach einem der Ansprüche 4 bis 6,
**dadurch gekennzeichnet, dass**
der Automat (2) ein Kaffeevollautomat, ein Kühlautomat oder ein Waschautomat ist.

8. Verfahren zur Erkennung des Gebrauchszustandes einer Filtereinheit (1) nach einem der Ansprüche 1 bis 3 in einem wasserführenden Automaten (2) nach einem der Ansprüche 4 bis 7,
**dadurch gekennzeichnet, dass**
- vor dem Einsetzen der Filtereinheit (1) in den Automaten (2) mittels eines Drucksensors oder mittels der Durchflussmessung des Durchflussmessgerätes (9) ein in der elektronischen Steuerungseinheit (10) verarbeitbarer Istwert des Druckes beziehungsweise des Volumenstromes des Strömungsleitungssystems erfasst wird,
- anschließend eine neue, ungebrauchte, eine Membran (5) an ihrem Wasserzulauf (3) oder Wasserablauf (4) aufweisende Filtereinheit (1) in die Aufnahmemechanik oder Aufnahmegeometrie des Automaten (2) eingesetzt wird und
- ein Unterdruck durch die nachfolgende Aktivierung der Pumpe (6) des Strömungsleitungssystems des Automaten (2) erzeugt wird, sodass die Membran (5) durch diesen Unterdruck zerstört wird.

9. Verfahren nach Anspruch 8,
**dadurch gekennzeichnet, dass**
nach der Zerstörung der Membran (5) mittels eines Drucksensors oder mittels der Durchflussmessung des Durchflussmessgerätes (9) der plötzlich ansteigende Volumenstrom oder der Druckabfall im Strömungsleitungssystem als Steuerungssignal für die erfolgreiche Aktivierung der neu eingesetzten Filtereinheit (1) erfasst wird.

10. Verfahren zur Bestimmung der Lebensdauer einer Filtereinheit (1) nach einem der Ansprüche 1 bis 3 in einem wasserführenden Automaten (2) nach einem der Ansprüche 4 bis 7,
**dadurch gekennzeichnet, dass**
mittels der elektronischen Steuerungseinheit (10) und mittels des Durchflussmessgerätes (9) des wasserführenden Automaten (2) die Anzahl der Wasserentnahmen aus dem einen Wasservorrat enthaltenden Vorratsbehälter (7) oder das kumulierte Wasservolumen erfasst wird und nach Erreichung eines in der elektronischen Steuerungseinheit (10) gespeicherten Istwertes ein Signal zum Austausch der Filtereinheit (1) erzeugt und visuell dargestellt wird.

11. Verfahren zur Bestimmung der Lebensdauer einer Filtereinheit (1) nach einem der Ansprüche 1 bis 3 in einem wasserführenden Automaten (2) nach einem der Ansprüche 4 bis 7,
**dadurch gekennzeichnet, dass**
mittels der elektronischen Steuerungseinheit (10) und eines der Filtereinheit (1) nachgeordneten Drucksensors in dem Strömungsleitungssystem des wasserführenden Automaten (2) ein sich durch den Verbrauch der Filtereinheit (1) einstellender Druckanstieg erfasst wird und nach Erreichen eines in der elektronischen Steuerungseinheit (10) gespeicherten Istwertes ein Signal zum Austausch der Filtereinheit (1) erzeugt und visuell dargestellt wird.
